# EUROPEAN PATENT SPECIFICATION

(11) **EP 2 505 607 B1**
(45) Date of publication and mention of the grant of the patent: **03.05.2017**
(21) Application number: 12001996.3
(22) Date of filing: 21.03.2012
(51) Int. Cl.: C08L 25/12, C08L 55/02, C08K 5/523, C08L 63/00, C08L 75/04

(54) **Thermoplastic ABS resin compositions having flame retardancy**
Thermoplastische ABS-Harzzusammensetzungen mit Flammverzögerung
Compositions de résine ABS thermoplastique résistante à la flamme

(30) Priority: 01.04.2011 KR 20110030007
(43) Date of publication of application: 03.10.2012
(73) Proprietor: LG CHEM, LTD., Seoul 150-721 (KR)
(72) Inventor: Jang, Min-Sul, Yeosu-si Jeollanam-do 550-050 (KR); Nam, Ki-Young, Yeosu-si Jeollanam-do 550-760 (KR); Yoo, Je-sun, Pohang-si Gyeongbuk 790-904 (KR); Hwang, Yong-Yeon, Daejeon 305-770 (KR); Sim, Jae-Young, Yeosu-si Jeollanam-do 550-050 (KR)
(74) Representative: Goddar, Heinz J.

(56) References cited:
- EP-A1- 1 312 644
- JP-A- 2002 201 330
- LEE K ET AL: "Studies on the thermal stabilization enhancement of ABS; synergistic effect by triphenyl phosphate and epoxy resin mixtures", POLYMER, ELSEVIER SCIENCE PUBLISHERS B.V, GB, vol. 43, no. 8, 1 April 2002 (2002-04-01), pages 2249-2253, XP004335727, ISSN: 0032-3861, DOI: 10.1016/S0032-3861(02)00024-1

## Description

### BACKGROUND OF THE INVENTION

### Field of the Invention

The present invention relates to a thermoplastic and flame retardant ABS resin composition. More particularly, the present invention relates to a thermoplastic and flame retardant ABS resin composition with superior flame retardancy to external candle flame ignition.

### Description of the Related Art

In general, an acrylonitrile-butadiene-styrene (hereinafter, referred to as ABS) resin is widely used as exterior materials of electric/electrical products and office machines and the like due to stiffness and chemical resistance of acrylonitrile, and processability and mechanical properties of butadiene and styrene. However, the ABS resin is inherently readily combustible and exhibits extremely poor flame retardancy.

Due to these problems, the ABS resin used for electric/electrical products, office machines and the like should satisfy flame-retardancy standards in order to secure safety to flames.

Methods for imparting flame retardancy to ABS resins include polymerization of rubber-modified styrene resins through incorporation of flame-retardant monomers, mixing flame retardant and auxiliary flame retardants with the prepared rubber-modified styrene resins and the like. Examples of the flame retardants include halogen flame retardants, non-halogen flame retardants such as phosphorous, nitrogen and hydroxide flame retardants, and examples of the auxiliary flame retardants include antimony compounds, silicon compounds, zinc compounds and the like.

The halogen flame retardants exhibit high flame retardancy efficiency, as compared to non-halogen flame retardants, and exhibit superior mechanical properties comparable to rubber-modified styrene resins. For this reason, imparting flame retardancy to ABS resins using halogen flame retardants is currently the most generally used method. Of these, bromine-based flame retardants are particularly efficient. However, when a bromine-based flame retardant is incorporated during processing of ABS resins, thermal stability is deteriorated and the flame retardant is decomposed due to high temperatures and pressures during the processing, thus causing generation of corrosive toxic gases and negatively affecting work environments and human health. This is a problem which also occurs when the ABS resin processed by incorporating a bromine-based flame retardant combusts.

In an attempt to avoid these problems, a non-halogen flame retardant is used and, in particular, a phosphorous-based flame retardant is generally used. However, phosphorous-based flame retardants are disadvantageously incorporated in an excessive amount due to low flame retardant efficiency, as compared to halogen flame retardants. In addition, thermoplastic resin compositions which do not generate char cannot sufficiently exert flame retardancy due to the principle of phosphorous-based flame retardant systems.

Meanwhile, as shown in EP 1 312 644 A1 and JP 2002 201330 A, there is a vertical combustion test method in accordance with UL94 as a flame retardant standard and a flame retardancy identification test method. This method is a standard to evaluate flame resistance against inner combustion caused by short circuit or the like of a circuit substrate present in a final electric product. Meanwhile, an external candle flame ignition standard (related standard: IEC TS 62441) which is standardized is a standard through which flame resistance of a final product is evaluated, when a candle as an exterior ignition source comes in contact with the product due to changes in outer environments such as earthquakes.

The external candle flame ignition standard is utilized in a wider range of applications since subjects to which the standard is applied are all combustible materials and is more realistic since the standard presumes a case of flames of burning candles as fires which may be often generated in houses.

Meanwhile, LEE K ET AL: "Studies on the thermal stabilization enhancement of ABS; synergistic effect by triphenyl phosphate and epoxy resin mixtures"(POLYMER, vol.43, no.8, 1 April 2002(2002-04-01), pages2249-2253) uses as an evaluation method LOI (limiting oxygen index), which requires to completely bum the product.

### SUMMARY OF THE INVENTION

In an attempt to solve these problems, the inventors of the present invention discovered that flame retardancy to external candle flame ignition can be obtained by incorporating a phosphorous-based flame retardant and an epoxy resin as a char-generating material into a thermoplastic resin comprising an acrylonitrile-butadiene-styrene copolymer and a styrene-acrylonitrile copolymer. The present invention has been completed based on this discovery.

Therefore, the present invention has been made in view of the above problems, and it is an object of the present invention to provide a resin composition with superior flame retardancy to external candle flame ignition.

In accordance with an aspect of the present invention, the above and other objects can be accomplished by the provision of a thermoplastic flame-retardant resin composition, according to claim 1, comprising: (A) 100 parts by weight of a base resin consisting of 10 to 90% by weight of an acrylonitrile-butadiene-styrene copolymer and 90 to 10% by weight of a styrene-acrylonitrile (hereinafter, referred to as SAN) copolymer; (B) 1 to 30 parts by weight of an epoxy resin; and (C) 1 to 30 parts by weight of a phosphorous-based flame retardant.

### DETAILED DESCRIPTION OF THE INVENTION

Hereinafter, the present invention will be described in detail.

The thermoplastic flame-retardant resin composition of the present invention comprises (A) 100 parts by weight of a base resin consisting of 10 to 90% by weight of an acrylonitrile-butadiene-styrene copolymer and 90 to 10% by weight of a styrene-acrylonitrile copolymer having a weight average molecular weight of 50,000 to 150,000, and containing 20 to 40% by weight of an acrylonitrile monomer, (B) 1 to 30 parts by weight of an epoxy resin consisting of a combination of a urethane-modified epoxy resin of Formula 1, a multifunctional epoxy resin of Formula 3 and an epoxy derivative of Formula 4, and (C) 1 to 30 parts by weight of a phosphorous-based flame retardant.

The acrylonitrile-butadiene-styrene copolymer can be prepared in the form of a powder by subjecting a butadiene rubber, an acrylonitrile monomer and a styrene monomer to emulsion graft polymerization, followed by aggregation, dehydration and drying, but is not particularly limited thereto. Preferably, a butadiene rubber having an average particle size of 0.1 to 0.5 µm is present in a high percentage by weight.

Emulsion graft polymerization is preferably carried out by continuously or simultaneously incorporating a monomer mixture consisting of 5 to 40 parts by weight of acrylonitrile and 20 to 65 parts by weight of styrene into a mixed solution consisting of 50 to 70 parts by weight of butadiene rubber, 0.6 to 2 parts by weight of an emulsifying agent, 0.2 to 1 parts by weight of a molecular weight modifier, and 0.05 to 0.5 parts by weight of a polymerization initiator, based on 100 parts by weight of the total content of the monomers present in the acrylonitrile-butadiene-styrene copolymer.

Aggregation is preferably carried out in the presence of a 5% aqueous sulfuric acid solution.

The styrene-acrylonitrile copolymer has a weight average molecular weight of 50,000 to 150,000 and contains 20 to 40% by weight of an acrylonitrile monomer, and may be used alone or in combination of two or more types.

In terms of mechanical properties of resins, preferably, the ABS copolymer constituting a base resin is present in an amount of 10 to 90% by weight and SAN is present in an amount lower than 90 to 10% by weight and, more preferably, the ABS copolymer is present in an amount of 10 to 50% by weight and SAN is present in an amount of 90 to 50% by weight. The epoxy resin used is miscible with the base resin and generates char when a processed thermoplastic resin combusts. The epoxy resin consists of a combination of a urethane-modified epoxy resin represented by the following Formula 1, a multifunctional epoxy resin represented by the following Formula 3 and an epoxy derivative represented by the following Formula 4, in terms of improvement of external candle flame ignition flame retardancy.

Of these, the urethane-modified epoxy resin is obtained by addition-reacting a compound having a urethane functional group with an epoxy ring and has a structure in which urethane-modified epoxy groups and non-urethane-modified epoxy groups are present as a mixture in one molecule. 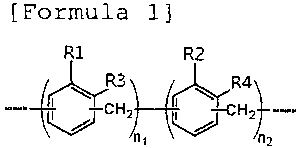 wherein R1 is an epoxy group having a structure of 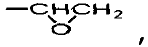 R3 and R4 are independently a hydrogen atom or an alkyl group having 1 to 20 carbon atoms or an aryl group, and n1 and n2 are natural numbers of 1 to 100,
R2 is a group represented by Formula 2 in which a terminal thereof is substituted by an isocyanate group. 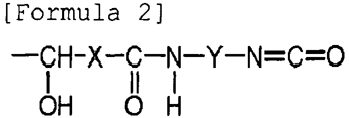 wherein X and Y are an alkyl group having 1 to 20 carbon atoms or an aryl group, each of which optionally contains oxygen, nitrogen or the like.

The multifunctional epoxy resin is represented by the following Formula 3: 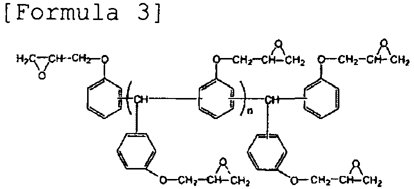 wherein n is a natural number of 1 to 100. The epoxy derivative is represented by the following Formula 4: 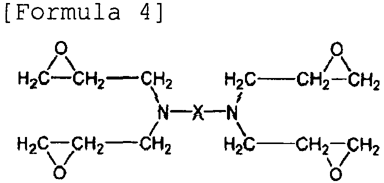 wherein X is alkyl having 1 to 30 carbon atoms or an aryl group, in which X optionally contains oxygen, nitrogen or the like.

The urethane-modified epoxy resin, multifunctional epoxy resin and epoxy derivative constituting the epoxy resin are used in combination The epoxy resin is present in an amount of 1 to 30 parts by weight, based on 100 parts by weight of the base resin. The reason behind this is that the thermoplastic resin composition prepared within this range produces char and thus exhibits superior flame retardancy without using an excess of phosphorous-based flame retardant. The phosphorous-based flame retardant is present in an amount of 1 to 30 parts by weight, based on 100 parts by weight of the base resin. The thermoplastic resin composition prepared within this range is effective in exhibiting superior flowability or gloss without greatly causing deterioration in mechanical properties or thermal stability.

Any phosphorous-based flame retardant may be used without particular limitation so long as it is commonly used for thermoplastic resins. Examples of the phosphorous-based flame retardant include organic phosphorous-based flame retardants such as phosphate compounds including triphenylphosphate, tricresylphosphate, tri(2,6-dimethylphenyl)phosphate, and tri(2,4,6-trimethylphenyl)phosphate, diphosphate compounds including tetraphenyl resorcinol diphosphate, tetracresyl resorcinol diphosphate, tetra(2,6-dimethylphenyl)resorcinol diphosphate, tetraphenyl bisphenol A diphosphate, polyphosphate compounds having three or more phosphate groups, phosphonate compounds, and phosphinate compounds. This compound may be used alone or combinations thereof.

The method for preparing the thermoplastic flame retardant resin composition with superior flame retardancy according to the present invention may comprise adding the components A) to C) to an extruder, and mixing and extruding the same at a barrel temperature of 230 to 250°C. The extruder is not particularly limited and may be a twin screw extruder.

Now, the present invention will be described in more detail with reference to the following Examples. These examples are only provided to illustrate the present invention.

### [Example 1, not according to the invention

10 parts by weight of a urethane-modified epoxy resin of Formula 1 (product name: KD-1090, available from Kukdo Chemical Co., Ltd.) as an epoxy resin, and 10 parts by weight of tetra(2,6-dimethylphenyl)resorcinol diphosphate (product name: PX-200, available from Daihachi Kagaku Kogyo Co., Ltd., Japan) as a phosphorous-based flame retardant were added to 100 parts by weight of a base resin consisting of 25 parts by weight of an ABS copolymer (containing 55% by weight of a butadiene rubber) produced by LG Chem. Ltd. from a butadiene rubber latex having an average particle size of 0.3 µm by emulsion graft polymerization and 75 parts by weight of a styrene-acrylonitrile copolymer containing 25% by weight of acrylonitrile and having a weight average molecular weight of 120,000, the resulting mixture was homogeneously mixed using a Hansel mixer and a thermoplastic resin composition was prepared in the form of a pellet through a twin screw extruder.

The pellet-form thermoplastic resin composition was subjected to injection molding to produce samples for flame retardancy testing having a width of 10 centimeters, a length of 10 centimeters and a thickness 3 millimeters.

### [Example 2, not according to the invention ]

The same test as in Example 1 was repeated except that a multifuntional epoxy resin of Formula 3 (product name: DNTH, available from Nippon Kayaku Co., Ltd.) was used as an epoxy resin instead of the urethane-modified epoxy resin of Formula 1.

### [Example 3, not according to the invention]

The same test as in Example 1 was repeated except that a multifuntional epoxy resin of Formula 4 (product name: KDT-4400, available from Kukdo Chemical. Co., Ltd.) was used as an epoxy resin instead of the urethane-modified epoxy resin of Formula 1.

### [Example 4]

The same test as in Example 1 was repeated except that 8 parts by weight of a urethane-modified epoxy resin of Formula 1, 1 part by weight of a multifuntional epoxy resin of Formula 3 and 1 part by weight of an epoxy derivative of Formula 4 were added as epoxy resins.

### [Comparative Example 1]

The same test as in Example 1 was repeated except that neither phosphorous-based flame retardant nor epoxy resin was added.

### [Comparative Example 2]

The same test as in Example 1 was repeated except that 20 parts by weight of a urethane-modified epoxy resin was added as an epoxy resin and a phosphorous-based flame retardant was not added.

### [Comparative Example 3]

The same test as in Example 1 was repeated except that 20 parts by weight of a multifuntional epoxy resin was added as an epoxy resin and a phosphorous-based flame retardant was not added.

### [Comparative Example 4]

The same test as in Example 1 was repeated except that 20 parts by weight of an epoxy derivative was added as an epoxy resin and a phosphorous-based flame retardant was not added.

### [Comparative Example 5]

The same test as in Example 1 was repeated except that an epoxy resin was not added and 20 parts by weight of a phosphorous-based flame retardant was added.

### [Comparative Example 6]

The same test as in Example 1 was repeated except that 10 parts by weight of an o-cresol novolac epoxy resin was added as an epoxy resin and 10 parts by weight of a phosphorous-based flame retardant was added.

### [Experimental Example]

The external candle flame ignition flame retardancy of thermoplastic flame-retardant resin composition samples prepared in Examples 1 to 4 and Comparative Examples 1 to 6 were measured in accordance with IEC TS 62441 and the results thus obtained are shown in Table 1 below. A case wherein the flame source was removed and flames flared on flame-retardant resin composition samples were then extinguished within 3 minutes in accordance with the standard, was represented by "PASS" and, otherwise, were represented by "FAIL".

**[TABLE 1]**

| Items | | Examples | | | | Comparative Examples | | | | | |
|---|---|---|---|---|---|---|---|---|---|---|---|
| | | 1 | 2 | 3 | 4 | 1 | 2 | 3 | 4 | 5 | 6 |
| Emulsion-polymerized ABS | | 25 | 25 | 25 | 25 | 25 | 25 | 25 | 25 | 25 | 25 |
| SAN | | 75 | 75 | 75 | 75 | 75 | 75 | 75 | 75 | 75 | 75 |
| Epoxy resin | Urethane-modified epoxy resin | 10 | - | - | 8 | - | 20 | - | - | - | - |
| | Multifuntional epoxy resin | - | 10 | - | 1 | - | - | 20 | - | - | - |
| | Epoxy derivative | - | - | 10 | 1 | - | - | - | 20 | - | - |
| | o-cresol novolac epoxy resin | - | - | - | - | - | - | - | - | - | 10 |
| Phosphorous-based flame retardant | | 10 | 10 | 10 | 10 | - | - | - | - | 20 | 10 |
| Test results of external candle flame ignition | | PASS | PASS | PASS | PASS | FAIL | FAIL | FAIL | FAIL | FAIL | FAIL |

As can be seen from Table 1 above, Examples 1, 2, 3 and 4 in which both the epoxy resin and the phosphorous-based flame retardant were incorporated passed the flame retardancy standard of external candle flame ignition.

On the other hand, it can be seen that Comparative Example 1 in which neither epoxy resin nor phosphorous-based flame retardant was incorporated, and Comparative Example 2, 3, 4 and 5 in which either an epoxy resin or a phosphorous-based flame retardant was incorporated did not pass the external candle flame ignition standard.

In particular, flame retardant samples of Comparative Examples 1, 2, 3 and 4 were completely destroyed by fire since they did not contain a phosphorous-based flame retardant, and the sample of Comparative Example 5 was slightly ignited owing to the effect of phosphorous-based flame retardant, but was holed due to non-generation of char and underwent delayed extinguishment or was completely destroyed by fire.

In addition, it can be seen that the sample of Comparative Example 6 had a similar epoxy content to Examples 1, 2 and 3, but was completely destroyed by fire when combusted and could not pass the external candle flame ignition standard.

The o-cresol novolac epoxy resin used as an epoxy resin in Comparative Example 6 was considered to be a compound having low char production effects, which corresponds to a starting material prior to preparation of a urethane-modified epoxy (n2 in Formula 1 is 0) as a urethane-modified epoxy resin of Formula 1 in which the epoxy group was not substituted at all and the epoxy group still remained.

In conclusion, the thermoplastic resin composition of the present invention satisfies flame retardancy standards of external candle flame ignition based on production of char using both an epoxy resin and a phosphorous-based flame retardant.

As apparent from the above description, the present invention provides a thermoplastic resin composition with superior flame retardancy containing both an epoxy resin and a phosphorous-based flame retardant. In particular, the composition can satisfy flame retardancy identification standard, external candle flame ignition identification. The preferred embodiments of the present invention have been disclosed for illustrative purposes

## Claims

1. A thermoplastic flame-retardant resin composition comprising:
(A) 100 parts by weight of a base resin consisting of 10 to 90% by weight of an acrylonitrile-butadiene-styrene copolymer and 90 to 10% by weight of a styrene-acrylonitrile copolymer having a weight average molecular weight of 50,000 to 150,000, and containing 20 to 40% by weight of an acrylonitrile monomer;
(B) 1 to 30 parts by weight of an epoxy resin consisting of a combination of a urethane-modified epoxy resin, a multifunctional epoxy resin and an epoxy derivative, and
(C) 1 to 30 parts by weight of a phosphorous-based flame retardant, wherein the urethane-modified epoxy resin satisfies Formula 1 below: 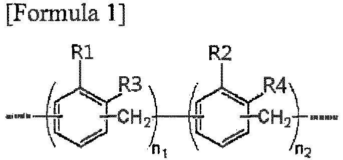 wherein R1 is an epoxy group having a structure of 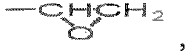 R3 and R4 are independently a hydrogen atom or an alkyl group having 1 to 20 carbon atoms or an aryl group, and n1 and n2 are natural numbers of 1 to 100, R2 is a group represented by Formula 2 in which a terminal thereof is substituted by an isocyanate group 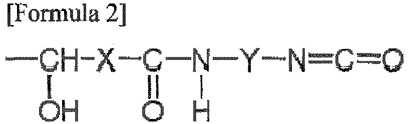 wherein X and Y are an alkyl group having 1 to 20 carbon atoms or an aryl group, each of which optionally contains oxygen or nitrogen,
wherein the multifuntional epoxy resin satisfies Formula 3 below: 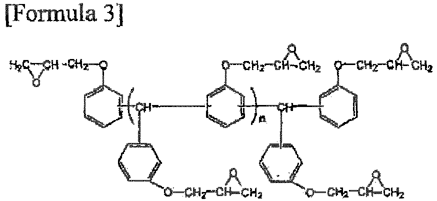 wherein n is a natural number of 1 to 100, and wherein the epoxy derivative satisfies Formula 4 below: 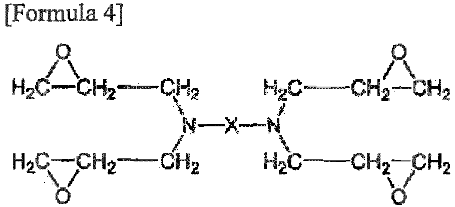 wherein X is alkyl having 1 to 30 carbon atoms, in which X optionally contains oxygen or nitrogen.

2. The thermoplastic flame-retardant resin composition according to claim 1, wherein the acrylonitrile-butadiene-styrene copolymer contains 50 to 70% by weight of a butadiene rubber and is prepared by emulsion graft polymerization.

3. The thermoplastic flame-retardant resin composition according to claim 1, wherein the (C) phosphorous-based flame retardant is selected from the group consisting of phosphate compounds, diphosphate compounds, polyphosphate compounds having three or more phosphate groups, phosphonate compounds, phosphinate compounds, and metal diethyl phosphinate compounds and combinations thereof.

4. The thermoplastic flame-retardant resin composition according to claim 1, wherein the resin composition further comprises one or more additives selected from the group consisting of an impact modifier, a heat stabilizer, an antidropping agent, an antioxidant, a photostabilizer, a UV blocker, a pigment and an inorganic filler and a combination thereof.

## Patentansprüche

1. Thermoplastische Flammschutzharzzusammensetzung, umfassend:
(A) 100 Gewichtsteile eines Basisharzes bestehend aus 10 bis 90 Gew.-% eines Acrylnitril-Butadien-Styrol-Copolymers und 90 bis 10 Gew.-% eines Styrol-Acrylnitril-Copolymers mit einem Gewichtsmittelmolekulargewicht von 50.000 bis 150.000, und enthaltend 20 bis 40 Gew.-% eines Acrylnitrilmonomers;
(B) 1 bis 30 Gewichtsteile eines Epoxyharzes bestehend aus einer Kombination eines Urethan-modifizierten Epoxyharzes, eines mehrfunktionellen Epoxyharzes und eines Epoxyderivats, und
(C) 1 bis 30 Gewichtsteile eines Flammschutzmittels auf Phosphorbasis, wobei das Urethan-modifizierte Epoxyharz Formel 1 unten erfüllt: 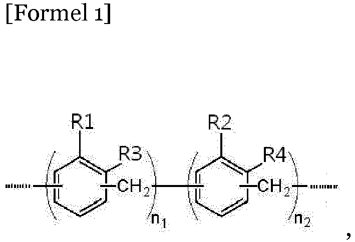 wobei R1 eine Epoxygruppe mit einer Struktur von 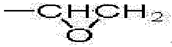 ist, R3 und R4 unabhängig ein Wasserstoffatom oder eine Alkylgruppe mit 1 bis 20 Kohlenstoffatomen oder eine Arylgruppe sind, und n1 und n2 natürliche Zahlen von 1 bis 100 sind, R2 eine Gruppe ist, die durch Formel 2 dargestellt ist, bei der ein Ende derselben durch eine Isocyanatgruppe substituiert ist: 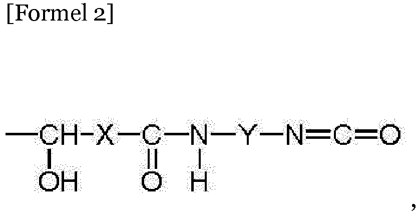 wobei X und Y eine Alkylgruppe mit 1 bis 20 Kohlenstoffatomen oder eine Arylgruppe sind, wobei jede derselben optional Sauerstoff oder Stickstoff enthält,
wobei das mehrfunktionelle Epoxyharz Formel 3 unten erfüllt: 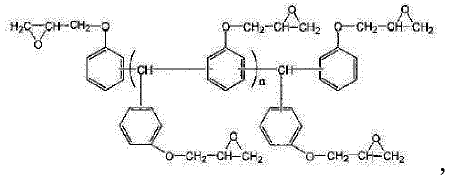 wobei n eine natürliche Zahl von 1 bis 100 ist, und
wobei das Epoxyderivat Formel 4 unten erfüllt: 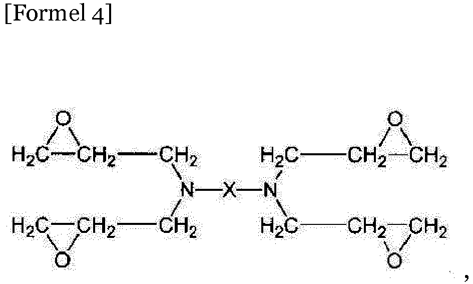 wobei X Alkyl mit 1 bis 30 Kohlenstoffatomen ist, wobei X optional Sauerstoff oder Stickstoff enthält.

2. Thermoplastische Flammschutzharzzusammensetzung nach Anspruch 1, wobei das Acrylnitril-Butadien-Styrol-Copolymer 50 bis 70 Gew.-% eines Butadienkautschuks enthält und durch Emulsionspfropfpolymerisation hergestellt ist.

3. Thermoplastische Flammschutzharzzusammensetzung nach Anspruch 1, wobei das (C) Flammschutzmittel auf Phosphorbasis ausgewählt ist aus der Gruppe bestehend aus Phosphatverbindungen, Diphosphatverbindungen, Polyphosphatverbindungen mit drei oder mehr Phosphatgruppen, Phosphonatverbindungen, Phosphinatverbindungen und Metalldiethylphosphinatverbindungen und Kombinationen derselben.

4. Thermoplastische Flammschutzharzzusammensetzung nach Anspruch 1, wobei die Harzzusammensetzung ferner ein oder mehrere Additive umfasst, die ausgewählt sind aus der Gruppe bestehend aus einem Schlagzähmodifizierer, einem Wärmestabilisator, einem Antitropfmittel, einem Antioxidationsmittel, einem Photostabilisator, einem UV-Blocker, einem Pigment und einem anorganischen Füllstoff und einer Kombination derselben.

## Revendications

1. Composition de résine thermoplastique résistante à la flamme comprenant :
(A) 100 parties en poids d'une résine de base constituée de 10 à 90 % en poids d'un copolymère acrylonitrile-butadiène-styrène et de 90 à 10 % en poids d'un copolymère styrène-acrylonitrile ayant un poids moléculaire moyen en poids de 50.000 à 150.000 et contenant 20 à 40 % en poids d'un monomère acrylonitrile ;
(B) 1 à 30 parties en poids d'une résine époxy constituée d'une combinaison d'une résine époxy modifiée par un uréthane, d'une résine époxy multifonctionnelle et d'un dérivé époxy, et
(C) 1 à 30 parties en poids d'un produit résistant à la flamme à base de phosphore dans lequel la résine époxy modifiée par un uréthane répond à la formule 1 présentée ci-dessous : 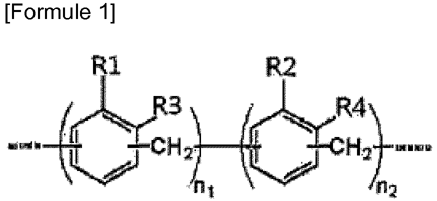 où R1 représente un groupe époxy ayant une structure de 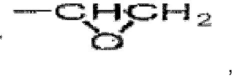 R3 et R4 représentent indépendamment un atome d'hydrogène ou un groupe alkyle portant 1 à 20 atomes de carbone ou un groupe aryle, et n1 et n2 désignent des nombres naturels allant de 1 à 100, R2 désigne un groupe représenté par la formule 2 dans laquelle une terminaison de celle-ci est substituée par un groupe isocyanate ; 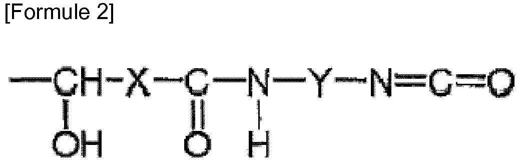 où X et Y représentent un groupe alkyle portant 1 à 20 atomes de carbone ou un groupe aryle, chacun d'eux contenant éventuellement de l'oxygène ou de l'azote, où la résine époxy multifonctionnelle répond à la formule 3 ci-dessous : 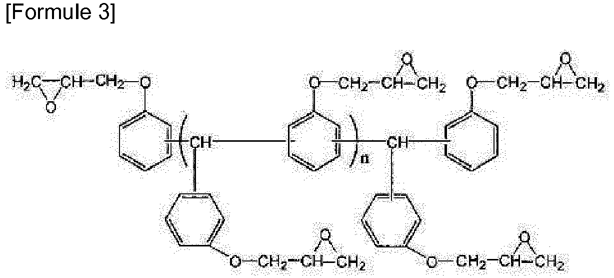 où n représente un nombre naturel allant de 1 à 100, et où le dérivé époxy répond à la formule 4 ci-dessous : 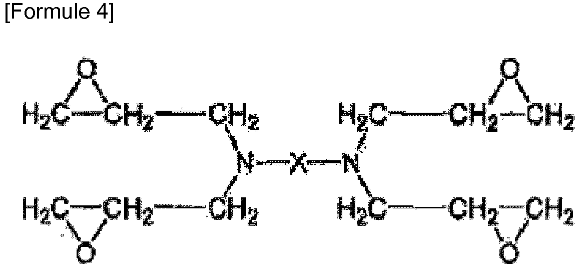 où X représente un alkyle portant 1 à 30 atomes de carbone, dans lesquels X contient éventuellement de l'oxygène ou de l'azote.

2. Composition de résine thermoplastique résistante à la flamme selon la revendication 1, dans laquelle le copolymère acrylonitrile-butadiène-styrène contient 50 à 70 % en poids d'un caoutchouc de butadiène et est préparé par polymérisation-greffage en émulsion.

3. Composition de résine thermoplastique résistante à la flamme selon la revendication 1, dans laquelle l'agent résistant à la flamme à base de phosphore (C) est sélectionné dans le groupe constitué de composés phosphate, de composés diphosphate, de composés polyphosphate ayant trois groupes de phosphate ou davantage, de composés phosphonate, de composés phosphinate et de composés phosphinate diéthylique de métal et de combinaisons de ceux-ci.

4. Composition de résine thermoplastique résistante à la flamme selon la revendication 1, la composition de résine comprenant en outre un ou plusieurs additifs sélectionnés dans le groupe constitué d'un agent modificateur de la résistance aux chocs, d'un agent thermo-stabilisant, d'un agent antigoutte, d'un antioxydant, d'un photostabilisant, d'un agent de protection contre les rayons ultraviolets, d'un pigment et d'une charge inorganique et d'une combinaison de ceux-ci.
